# FASCICULE DE BREVET EUROPEEN

(11) **EP 2 049 391 B1**
(45) Date de publication et mention de la délivrance du brevet: **23.05.2012**
(21) Numéro de dépôt: 07823328.5
(22) Date de dépôt: 24.07.2007
(51) Int. Cl.: B64D 11/00, B60R 5/00, B61D 37/00

(54) **COFFRE À BAGAGES ET PORTE ASSOCIÉE DESTINÉS NOTAMMENT À UN AÉRONEF**
GEPÄCKSCHLIESSFACH UND ENTSPRECHENDE TÜR, IM BESONDEREN FÜR EIN FLUGZEUG
LUGGAGE LOCKER AND ASSOCIATED DOOR WHICH ARE INTENDED IN PARTICULAR FOR AN AIRCRAFT

(30) Priorité: 24.07.2006 FR 0606735; 13.09.2006 US 844075 P
(43) Date de publication de la demande: 22.04.2009
(73) Titulaire: Airbus, 31707 Blagnac (FR)
(72) Inventeur: BOCK, Thomas-Mathias, 31330 Grenade-sur-Garonne (FR)
(74) Mandataire: Hartmann, Jean-Luc
(86) Numéro de dépôt international: PCT/FR2007/001270
(87) Numéro de publication internationale: WO 2008/012427

(56) Documents cités:
- WO-A-95/18040
- DE-A1- 4 425 869
- US-A- 4 275 942
- US-A1- 2002 101 090

## Description

La présente invention concerne un coffre à bagages et une porte associée installés dans une cabine d'aéronef.

Le domaine de la présente Invention est le transport de passagers dans un aéronef. Au cours d'un voyage, des bagages de voyageurs sont disposés dans des soutes de l'aéronef tandis que des bagages plus légers peuvent accompagner les voyageurs dans la cabine de l'aéronef. Dans cette cabine, des rangements sont prévus pour ces derniers bagages, appelés également bagages à main. Le plus souvent, ces rangements sont disposés en partie haute de la cabine de l'aéronef, sous le plafond de cette cabine et au-dessus des sièges destinés à accueillir les passagers.

Deux grands types de rangements pour bagages dans les aéronefs existent. On connaît d'un côté des coffres à bagages fixes et d'un autre côté des casiers à bagages pivotants. On appelle ici coffre à bagages un rangement qui présente un compartiment qui est fixe par rapport à la cabine de l'aéronef ainsi qu'une porte, généralement pivotante, permettant l'ouverture et la fermeture de l'accès au compartiment à bagages. Un casier à bagages présente quant à lui également un compartiment muni d'un accès permettant de déposer et retirer des bagages. Ce compartiment est ici un compartiment mobile entre une première position sortie dans laquelle l'accès au compartiment est ouvert et une position escamotée à l'intérieur du plafond de la cabine de l'aéronef et dans laquelle l'accès au compartiment est fermé.

Dans ces deux types de rangements, de fortes contraintes existent en matière d'esthétique. En effet, d'un côté un compartiment est fixe et impose sa forme à l'intérieur de la cabine de l'aéronef. De l'autre côté, la forme du plafond est imposée pour pouvoir servir d'obturateur aux compartiments mobiles lorsque ceux-ci doivent être fermés.

Le document DE-44 25 869 décrit un coffre à bagages destiné notamment à être disposé en partie haute d'une cabine d'aéronef et à recevoir les bagages des passagers. Ce coffre à bagages comporte un compartiment muni d'une ouverture. Cette ouverture est fermée par un capot, ou couvercle, qui vient fermer ladite ouverture en position fermée du coffre à bagages. Ce capot est monté pivotant et un mécanisme disposé sur les parois latérales du compartiment assure l'ouverture dudit capot.

Le document WO-95/18 040 divulgue un compartiment de rangement pour des bagages disposés au-dessus des sièges-passagers dans un avion. Ce compartiment de rangement comporte un réceptacle mobile couplé à une structure de support d'une conception modulaire permettant son préassemblage avant son installation dans l'avion. Il est prévu dans ce compartiment de rangement un moteur entraînant une chaîne-câble qui est fixée au réceptacle pour le déplacer par rapport à une structure. Le moteur est couplé mécaniquement à un arbre horizontal qui a une longueur correspondant à la longueur du compartiment de rangement en hauteur et qui a une roue dentée entraînant la chaîne-câble lorsqu'elle est tournée par le moteur. Le moteur fournit la totalité, ou une partie, de la force nécessaire pour soulever le réceptacle. La manoeuvre du compartiment de rangement par les passagers est donc facilitée.

Le document US-2002/0 101 090 révèle un coffre à bagages de type pivotant Ce coffre à bagages comporte une structure et un compartiment monté dans ladite structure. Il comporte en outre un dispositif de retenue disposé à l'intérieur du compartiment afin de pouvoir retenir les objets se trouvant à l'intérieur du compartiment lorsque celui-ci est dans sa position ouverte.

La présente invention a alors pour but de fournir un rangement pour bagages dans une cabine d'aéronef qui permette de laisser libre cours pour définir la forme que les designers souhaitent donner à l'espace intérieur de l'aéronef.

A cet effet, elle propose une cabine d'aéronef selon la revendication indépendante 1.

L'invention concerne une cabine d'aéronef, comportant un casier à bagages avec un compartiment présentant une face ouverte permettant l'accès au compartiment pour le dépôt et le retrait de bagages ou similaires à l'intérieur de celui-ci, une face inférieure destinée à recevoir les bagages ainsi qu'un fond opposé à la face ouverte du compartiment, ce compartiment étant monté pivotant autour d'un axe fixe de pivotement entre une position ouverte dans laquelle la face ouverte du compartiment est accessible à un usager, et une position fermée dans laquelle la face ouverte du compartiment est escamotée.

Selon l'invention, un tel casier à bagages comporte en outre une porte montée pivotante de telle sorte que cette porte fasse obstacle à l'accès à la face ouverte du compartiment lorsque le compartiment est en position fermée et autorise un libre accès à cette face lorsque le compartiment est en position ouverte, et des moyens de liaison relient la porte et le compartiment du casier à bagages de telle sorte que le mouvement de pivotement du compartiment entraîne le pivotement de la porte et/ou inversement.

De cette manière, deux éléments sont mobiles dans le casier à bagages : le compartiment et la porte pivotante. Ceci permet une plus grande latitude dans la conception de la forme du casier et de l'espace dans lequel il est disposé. En effet, la forme de la porte vient épouser dans la position fermée du casier à bagages la forme souhaitée pour l'agencement de la cabine (ou autre). Cette porte étant mobile, elle peut ensuite venir prendre une position escamotée permettant l'accès à l'intérieur du compartiment du casier à bagages.

Dans une forme de réalisation avantageuse, en position ouverte du compartiment la face inférieure est inclinée sur l'horizontale d'un angle compris par exemple entre 0° et 10° du côté de la face ouverte de manière à faciliter le retrait d'un bagage tandis qu'en position fermée du compartiment, la face inférieure est inclinée sur l'horizontale du côté du fond du compartiment. Ainsi, en position fermée, les bagages rangés dans le compartiment tendent naturellement par gravité à aller vers le fond du compartiment qui sert alors de butée.

Pour faciliter le mouvement du compartiment du casier à bagages, l'axe de pivotement du compartiment est sensiblement centré par rapport au fond et à la face ouverte du compartiment.

Une forme de réalisation préférée de l'invention prévoit que la face inférieure du compartiment comporte un habillage extérieur, et que la porte pivotante est dans le prolongement de cet habillage extérieur dans la position fermée du compartiment. L'habillage extérieur permet ainsi d'adapter la forme du casier à bagages à la forme de l'espace extérieur. Dans cette forme de réalisation, l'axe de pivotement de la porte est avantageusement parallèle à l'axe de pivotement du compartiment, et cet axe est de préférence du côté de la porte opposé à l'habillage extérieur de la face inférieure du compartiment. Cette configuration permet d'avoir un mouvement relatif des deux éléments mobiles simple. On peut également prévoir que la porte pivotante est dans le prolongement d'une face supérieure du compartiment dans la position ouverte de celui-ci.

Une forme de réalisation prévoit que les moyens de liaison comportent un levier de transmission de mouvement reliant la porte et le compartiment. Cette forme de réalisation présente l'avantage d'être simple à mettre en oeuvre, fiable et d'un prix de revient peu élevé. Dans cette forme de réalisation, le levier peut présenter un premier bras fixé sur la porte à proximité de l'axe de pivotement de la porte ainsi qu'un second bras monté entre d'une part l'extrémité du premier bras opposée à la porte et d'autre part au compartiment par l'intermédiaire d'une liaison pivot. On peut également envisager un mécanisme de renvoi avec d'autres types de liaison ou bien aussi un mécanisme avec plus de deux bras. Tout cela dépend du mouvement que l'on souhaite réaliser. L'invention visant à laisser une grande latitude dans la forme de la porte pivotante et aussi du compartiment à bagages, de nombreuses variantes du mécanisme de liaison entre ces deux éléments peuvent être envisagées pour s'adapter notamment à ces diverses formes.

Pour avoir un mécanisme plus simple, il est préférable que les moyens de liaison entre le compartiment et la porte soient tels que lors d'un mouvement le compartiment et la porte pivotent dans le même sens.

La présente invention concerne également un aéronef, caractérisé en ce qu'il comporte une cabine telle que décrite plus haut.

Des détails et avantages de la présente invention ressortiront mieux de la description qui suit, faite en référence aux dessins schématiques annexés sur lesquels :
La figure 1 est une vue schématique en coupe transversale d'un casier à bagages selon l'invention ainsi que partiellement aussi d'une cabine d'avion, le casier étant en position fermée,
La figure 2 est une vue correspondant à la figure 1 montrant le casier à bagages en position intermédiaire tandis que
La figure 3 montre ce casier à bagages en position fermée, dans une vue similaire.

Les dessins montrent un casier à bagages 2 monté pivotant autour d'un axe de pivotement 4. Il s'agit ici d'un casier à bagages 2 monté dans une cabine d'aéronef. Ce casier est monté dans la partie supérieure de cette cabine, au-dessus de sièges destinés à recevoir des passagers. L'axe de pivotement 4 est un axe longitudinal par rapport à la cabine de l'aéronef. Comme bien visible sur les dessins, cet axe est fixe par rapport à la cabine. On reconnaît sur les dessins le plafond 6 de cette cabine.

Le casier à bagages comporte un compartiment destiné à recevoir les bagages. Ce compartiment présente une face extérieure inférieure 8, un fond 10, une face supérieure 12 et des parois latérales 14. La forme de ce compartiment est sensiblement parallélépipédique. La face inférieure 8 est recouverte à l'extérieur par un habillage 16 légèrement arrondi de manière à former une face extérieure convexe. La face opposée au fond 10 est une face entièrement ouverte.

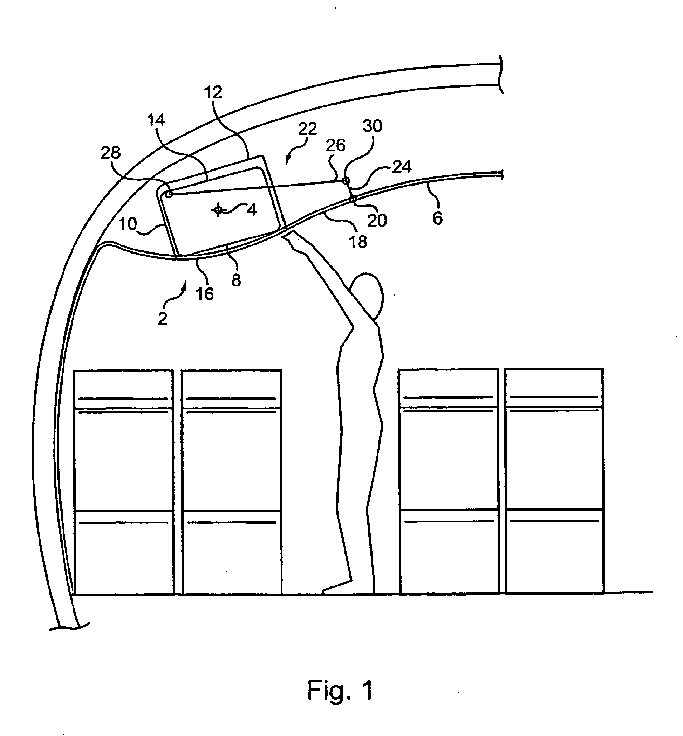

Sur la figure 1, le casier à bagages est représenté dans sa position fermée. Il est alors escamoté dans le plafond 6 de la cabine d'aéronef. L'habillage 16 s'inscrit dans la forme de ce plafond. On remarque alors également une porte 18 dans le prolongement de l'habillage 16 et raccordée elle aussi au plafond 6. Comme il ressort des différentes figures, cette porte 18 est pivotante. Son axe de pivotement 20 s'étend dans la forme de réalisation représentée parallèlement à l'axe de pivotement 4 du compartiment du casier à bagages 2. Dans la forme de réalisation préférée représentée, on remarque également que cet axe de pivotement 20 se trouve à la jonction de la porte pivotante 18 et du plafond 6, c'est-à-dire du côté de la porte opposé au compartiment du casier à bagages et à l'habillage 16 de celui-ci.

L'axe de pivotement 4 du compartiment du casier à bagages est perpendiculaire aux parois latérales 14 de ce compartiment et se trouve sensiblement au centre de la face ouverte avant, du fond 10, de la face inférieure 8 et de la face supérieure 12. Cet axe de pivotement se trouve donc sensiblement à équidistance de la face ouverte et du fond 10 de même qu'il est à équidistance sensiblement de la face inférieure 8 et de la face supérieure 12 dans ce mode de réalisation préféré.

On remarque ici que dans sa position fermée, la face inférieure 8 du compartiment est inclinée vers le fond 10. Ainsi, par gravité, les bagages placés dans le compartiment et reposant sur la face inférieure 8 ont tendance à venir buter contre le fond 10 du compartiment. Ils ont ainsi tendance à demeurer dans le compartiment et non pas à s'en échapper par la face ouverte de celui-ci.

Le compartiment et la porte pivotante 18 sont reliés par un levier 22. Ce levier présente un premier bras 24 et un second bras 26.

Le premier bras 24 est fixé sur la porte pivotante 18. Dans une forme de réalisation préférée, ce premier bras s'étend perpendiculairement à l'axe de pivotement 20 de la porte pivotante 18 et se trouve dans un même plan que cet axe 20. En outre, toujours pour cette forme de réalisation préférée, le premier bras 24 est sensiblement perpendiculaire à la porte pivotante 18.

Le second bras 26 du levier 22 relie le compartiment du casier à bagages 2 au premier bras 24. Le second bras est relié par une liaison pivot 28 à une paroi latérale 14 du compartiment. Une autre implantation du rattachement du levier 22 au compartiment peut être envisagée. La liaison pivot 28 comporte par exemple un axe et un palier. L'axe peut être solidaire du second bras 26 et le palier peut être solidaire de la paroi latérale 14 ou inversement. La liaison entre le second bras 26 et le premier bras 24 se fait également à l'aide d'une liaison pivot se présentant par exemple sous la forme d'une charnière 30. La liaison pivot 28 est disposée sur la paroi latérale 14 à proximité de l'intersection du fond 10 avec la paroi supérieure 12.

La description faite ci-dessus ne décrit qu'un seul levier 22. On peut bien entendu avoir un tel levier associé à chaque paroi latérale 14. Comme déjà évoqué, le levier reliant la porte pivotante et le compartiment du casier à bagages peuvent venir s'accrocher en différents points du compartiment et de la porte pivotante. La liaison entre le compartiment et la porte pivotante peut être assurée par d'autres moyens qu'un levier, par exemple un train d'engrenages. Cette dernière solution, bien qu'envisageable, est d'un prix de revient plus élevé. D'autres liaisons peuvent encore être envisagées.

Les figures 1 à 3 représentent trois positions relatives du compartiment du casier à bagages 2 et de la porte pivotante 18. Comme déjà mentionné, la figure 1 représente le casier à bagages dans sa position fermée. Pour ouvrir le casier à bagages 2, un passager saisit une poignée (non représentée) dissimulée par exemple dans l'habillage 16 de la face inférieure 8, à proximité de la porte pivotante 18. Il entraîne ainsi le compartiment du casier à bagages 2 à pivoter autour de son axe fixe de pivotement 4, avec un mouvement de rotation pure. Ce mouvement de pivotement est transmis par le levier 22 à la porte pivotante 18. Cette dernière pivote alors dans le même sens que le compartiment du casier à bagages 2. Dans la forme de réalisation représentée et dans le cas de figure des dessins, lors de l'ouverture du casier à bagages 2, le compartiment et la porte pivotante 18 tournent dans le sens des aiguilles d'une montre. Le levier 22 transmet tout aussi bien le mouvement du compartiment à la porte pivotante 18 dans un sens de pivotement que dans l'autre.

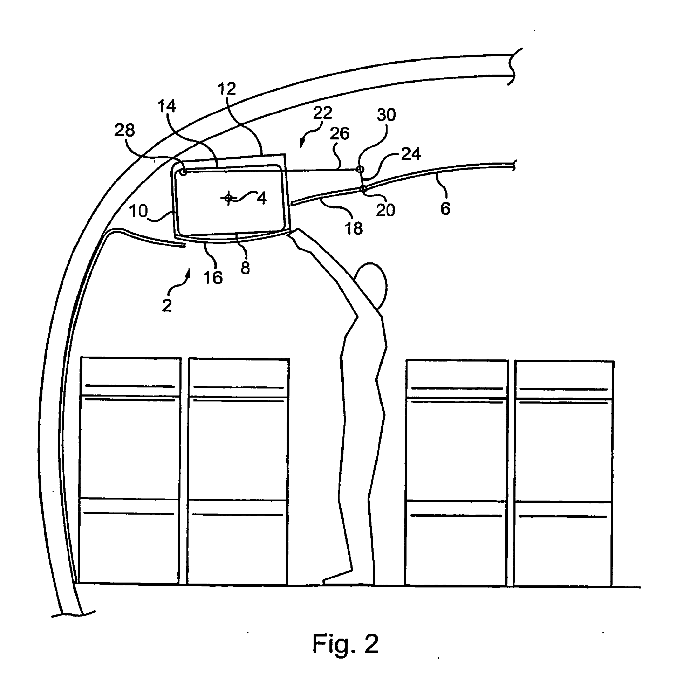

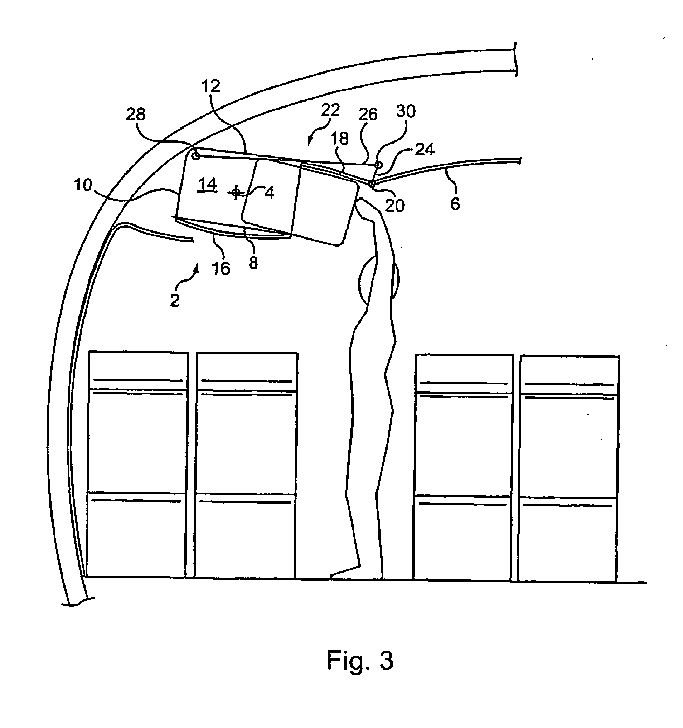

La figure 2 montre à titre illustratif une position intermédiaire lors de l'ouverture du casier à bagages 2. Sur la figure 3, le casier à bagages 2 est dans sa position ouverte. Dans cette dernière position, la face ouverte du compartiment du casier à bagages 2 est entièrement accessible depuis l'intérieur de la cabine de l'aéronef. La porte pivotante 18 est rentrée à l'intérieur du plafond 6 de la cabine et ne forme plus d'obstacle pour accéder à l'intérieur du compartiment du casier à bagages 2. Dans cette position, l'extrémité libre de la porte pivotante 18 arrive à l'arête supérieure de l'ouverture du compartiment. La porte pivotante 18 est alors sensiblement dans le prolongement de la face supérieure 12. La face inférieure 8 du compartiment est maintenant inclinée vers la face ouverte. Cette inclinaison est par exemple d'environ 8°. Elle permet de faciliter le retrait d'un bagage hors du compartiment sans que celui-ci ne tombe tout seul lors de l'ouverture du casier. Elle permet également à un passager de mieux voir à l'intérieur du compartiment dans la position ouverte du casier à bagages 2.

L'avantage d'avoir un compartiment pivotant associé à une porte pivotante est d'avoir une grande latitude pour la forme à donner au plafond 6 de la cabine de l'aéronef. La forme donnée à titre d'exemple sur les dessins annexés est une forme tout à fait inhabituelle dans les aéronefs connus. D'autres formes bien entendu peuvent être envisagées. On pourrait avoir par exemple une porte pivotante sensiblement parallèle au fond du compartiment dans la position fermée du casier à bagages. De nombreuses autres formes peuvent être envisagées par les designers.

La présente invention présente également (notamment grâce à l'utilisation d'un axe fixe de pivotement) l'avantage de ne pas présenter de surcoût par rapport aux solutions classiques utilisées dans le rangement des bagages. Un casier à bagages selon l'invention a un prix de revient similaire à celui d'un casier à bagages de l'art antérieur.

La présente invention ne se limite pas à la forme de réalisation préférée décrite ci-dessus à titre d'exemple non limitatif. Elle concerne également toutes les variantes de réalisations à la portée de l'homme du métier dans le cadre des revendications ci-après.

## Revendications

1. Cabine d'aéronef comportant un plafond, un casier pour bagages (2) ainsi qu'une porte (18) montée pivotante, **caractérisée en ce que**
le casier pour bagages (2) comporte un compartiment présentant une face ouverte permettant l'accès au compartiment pour le dépôt et la retrait de bagages ou similaires à l'intérieur de celui-ci, une face Inférieure (8) destinée à recevoir les bagages ainsi qu'un fond (10) opposé à la face ouverte du compartiment, ce compartiment étant monté pivotant autour d'un axe fixe de pivotement (4) entre une position ouverte dans laquelle la face ouverte du compartiment est accessible à un usager, et une position fermée dans laquelle la face ouverte du compartiment est escamotée,
**en ce que** la porte (18) est intégrée dans le plafond (6) de la cabine et est montée pivotante de telle sorte que cette porte (18) fasse obstacle à l'accès à la face ouverte du compartiment lorsque le compartiment est en position fermée et autorise un libre accès à cette face lorsque le compartiment est en position ouverte, et
**en ce que** des moyens de liaison (22) relient la porte (18) et le compartiment du casier à bagages de telle sorte que le mouvement de pivotement du compartiment entraîne le pivotement de la porte (18) et/ou inversement.

2. Cabine d'aéronef selon la revendication 1, dans laquelle en position ouverte du compartiment, la face inférieure (8) est inclinée sur l'horizontale du côté de la face ouverte de manière à faciliter le retrait d'un bagage tandis qu'en position fermée du compartiment, la face inférieure (8) est Inclinée sur l'horizontale du côté du fond (10) du compartiment.

3. Cabine d'aéronef selon la revendication 2, dans laquelle la face inférieure (8) est inclinée par rapport à l'horizontale en position ouverte d'un angle compris entre 0° et 10°.

4. Cabine d'aéronef selon la revendication 1 à 3, dans laquelle l'axe de pivotement (4) du compartiment est sensiblement centré par rapport au fond (10) et à la face ouverte du compartiment.

5. Cabine d'aéronef selon la revendication 1 à 4, dans laquelle la face Inférieure (8) du compartiment comporte un habillage (16) extérieur, et dans laquelle la porte pivotante (18) est dans le prolongement de cet habillage (16) extérieur dans la position fermée du compartiment

6. Cabine d'aéronef selon le revendication 6, dans laquelle l'axe de pivotement (20) de la porte (18) est parallèle à l'axe de pivotement (4) du compartiment, et dans laquelle cet axe (20) est du côté de la porte (18) opposé à l'habillage (16) extérieur de la face inférieure (8) du compartiment.

7. Cabine d'aéronef selon la revendication 1 à 6, dans laquelle la porte pivotante (18) est sensiblement dans le prolongement d'une face supérieure (12) du compartiment dans la position ouverte de celui-ci.

8. Cabine d'aéronef selon la revendication 1 à 7, dans laquelle les moyens de liaison comportent un levier (22) de transmission de mouvement reliant la porte (18) et le compartiment.

9. Cabine d'aéronef selon la revendication 8, dans laquelle le levier (22) présente un premier bras (24) fixé sur la porte (18) à proximité de l'axe de pivotement (20) de la porte (16) ainsi qu'un second bras (28) monté entre d'une part l'extrémité du premier bras (24) opposée à la porte (18) et d'autre part au compartiment par l'intermédiaire d'une liaison pivot (28).

10. Cabine d'aéronef selon la revendication 1 à 9. dans laquelle les moyens de liaison (22) entre le compartiment et la porte (18) sont tels que lors d'un mouvement le compartiment et la porte (18) pivotent dans le même sens.

11. Cabine d'aéronef selon l'une des revendications 1 à 10, dans laquelle le compartiment est escamoté dans le plafond (6) de la cabine dans la position fermée du casier pour bagages (2).

12. Cabine selon l'une des revendications 1 à 11, dans laquelle la porte (18) est montée pivotante autour d'un axe fixe de pivotement qui se trouve à la jonction de la porte pivotante et du plafond (6).

13. Aéronef, **caractérisé en ce qu'**il comporte au moins une cabine d'aéronef (2) selon l'une des revendications 1 à 12.

## Claims

1. An aircraft cabin comprising a ceiling, a luggage locker (2) as well as a pivotally mounted door (18), **characterized in that**:
the luggage locker (2) comprises a compartment having an open face allowing access to the compartment for putting in and taking out luggage or the like inside the latter, a lower face (8) intended to receive the luggage as well as a back (10) remote from the open face of the compartment, this compartment being pivotally mounted around a fixed axis of pivoting (4) between an open position in which the open face of the compartment is accessible to a user, and a closed position in which the open face of the compartment is retracted,
**in that** the door (18) is integrated into the ceiling (6) of the cabin and is pivotally mounted so that this door (18) forms a barrier to access to the open face of the compartment when the compartment is in closed position and allows free access to this face when the compartment is in open position,
and **in that** connection means (22) connect the door (18) and the compartment of the luggage locker so that the pivoting movement of the compartment brings about the pivoting of the door (18) and/or vice versa.

2. An aircraft cabin according to claim 1, in which in open position of the compartment, the lower face (8) is inclined from the horizontal towards the open face so as to facilitate the removal of a piece of luggage, whereas in closed position of the compartment, the lower face (8) is inclined from the horizontal towards the back (10) of the compartment.

3. An aircraft cabin according to claim 2, in which the lower face (8) is inclined in relation to the horizontal in open position by an angle between 0° and 10°.

4. An aircraft cabin according to one of claims 1 to 3, in which the axis of pivoting (4) of the compartment is substantially centered in relation to the back (10) and the open face of the compartment.

5. An aircraft cabin according to one of claims 1 to 4, in which the lower face (8) of the compartment comprises outer trimming (16), and in which the pivoting door (18) extends in alignment with that outer trimming (16) in the closed position of the compartment.

6. An aircraft cabin according to claim 5, in which the axis of pivoting (20) of the door (18) is parallel to the axis of pivoting (4) of the compartment, and in which this axis (20) is on the opposite side of the door (18) to the outer trimming (16) of the lower face (8) of the compartment.

7. An aircraft cabin according to one of claims 1 to 6, in which the pivoting door (18) is substantially in alignment with an upper face (12) of the compartment in the open position of the latter.

8. An aircraft cabin according to one of claims 1 to 7, in which the connection means comprise a lever (22) for transmission of movement connecting the door (18) and the compartment.

9. An aircraft cabin according to claim 8, in which the lever (22) has a first arm (24) fastened to the door (18) near the axis of pivoting (20) of the door (18), as well as a second arm (26) mounted between the compartment and the opposite end of the first arm (24) to the door (18), by means of a pivot connection (28).

10. An aircraft cabin according to one of claims 1 to 9, in which the connection means (22) between the compartment and the door (18) are such that during a movement, the compartment and the door (18) pivot in the same direction.

11. An aircraft cabin according to one of claims 1 to 10, in which the compartment is retracted into the ceiling (6) of the cabin in the closed position of the luggage locker (2).

12. A cabin according to one of claims 1 to 11, in which the door 18 is pivotally mounted around a fixed axis of pivoting which is situated at the junction of the pivoting door and the ceiling (6).

13. An aircraft, **characterized in that** it comprises at least one aircraft cabin according to one of claims 1 to 9.

## Patentansprüche

1. Luftfahrzeugkabine mit einer Decke, einem Gepäckaufnahmeraum (2) sowie einer verschwenkbar gelagerten Verschlussklappe (18), **dadurch gekennzeichnet, dass** der Gepäckaufnahmeraum (2) ein Fach aufweist, das eine offene Seite hat, die den Zugang zum Fach für das Ablegen und Herausnehmen von Gepäckstücken oder dergleichen innerhalb desselben gestattet, sowie eine Unterseite (8), die dazu bestimmt ist, die Gepäckstücke aufzunehmen, und eine Rückseite (10), die der offenen Seite des Fachs entgegengesetzt ist, wobei dieses Fach um eine feste Schwenkachse (4) herum zwischen einer offenen Stellung, in welcher die offene Seite des Fachs für einen Benutzer zugänglich ist, und einer geschlossenen Stellung, in welcher die offene Seite des Fachs zugeklappt ist, verschwenkbar gelagert ist,
dass die Verschlussklappe (18) in der Decke (6) der Kabine integriert und derart verschwenkbar gelagert ist, dass diese Verschlussklappe (18) den Zugang zur offenen Seite des Fachs dann verhindert, wenn das Fach in Schließstellung ist, und einen freien Zugang zu dieser Seite dann gestattet, wenn das Fach in Offenstellung ist, und dass die Verschlussklappe (18) und das Fach des Gepäckaufnahmeraums über Verbindungsmittel (22) derart verbunden sind, dass die Schwenkbewegung des Fachs die Schwenkbewegung der Verschlussklappe (18) und/oder umgekehrt bewirkt.

2. Luftfahrzeugkabine nach Anspruch 1,
wobei in Offenstellung des Fachs die untere Seite (8) aufseiten der offenen Seite gegenüber der Horizontalen geneigt ist, so dass das Herausnehmen eines Gepäckstücks erleichtert wird, während in Schließstellung des Fachs die untere Seite (8) aufseiten der Rückwand (10) des Fachs gegenüber der Horizontalen geneigt ist.

3. Luftfahrzeugkabine nach Anspruch 2,
wobei die Unterseite (8) in Offenstellung um einen Winkel zwischen 0° und 10° bezüglich der Horizontalen geneigt ist.

4. Luftfahrzeugkabine nach einem der Ansprüche 1 bis 3, wobei die Schwenkachse (4) des Fachs im Wesentlichen bezüglich der Rückseite (10) und bezüglich der offenen Seite des Fachs zentriert ist.

5. Luftfahrzeugkabine nach Anspruch 1 bis 4,
wobei die Unterseite (8) des Fachs eine Außenverkleidung (16) aufweist und wobei in Schließstellung des Fachs die verschwenkbare Verschlussklappe (18) in Verlängerung dieser Außenverkleidung (16) liegt.

6. Luftfahrzeugkabine nach Anspruch 5,
wobei die Schwenkachse (20) der Verschlussklappe (18) parallel zur Schwenkachse (4) des Fachs verläuft und wobei diese Achse (20) auf derjenigen Seite der Verschlussklappe (18) liegt, die der Außenverkleidung (16) der Unterseite (8) des Fachs entgegengesetzt ist.

7. Luftfahrzeugkabine nach Anspruch 1 bis 6,
wobei die verschwenkbare Verschlussklappe (18) im Wesentlichen in der Verlängerung einer oberen Seite (12) des Fachs in der Offenstellung desselben liegt.

8. Luftfahrzeugkabine nach Anspruch 1 bis 7,
wobei die Verbindungsmittel einen Hebel (22) zum Übertragen der Bewegung aufweisen, welcher die Verschlussklappe (18) und das Fach verbindet.

9. Luftfahrzeugkabine nach Anspruch 8,
wobei der Hebel (22) einen ersten Arm (24) aufweist, der an der Verschlussklappe (18) in der Nähe der Schwenkachse (20) der Verschlussklappe (18) befestigt ist, sowie einen zweiten Arm (26), der zwischen dem der Verschlussklappe (18) entgegengesetzten Ende des ersten Arms (24) einerseits und dem Fach andererseits über eine Drehzapfenverbindung (28) gelagert ist.

10. Luftfahrzeugkabine nach Anspruch 1 bis 9,
wobei die Verbindungsmittel (22) zwischen dem Fach und der Verschlussklappe (18) derart sind, dass bei einer Bewegung das Fach und die Verschlussklappe (18) sich in der gleichen Richtung verschwenken.

11. Luftfahrzeugkabirie nach Anspruch 1 bis 10,
wobei in der Schließstellung des Gepäckaufnahmeraums (2) das Fach in die Decke (6) der Kabine eingeklappt ist.

12. Luftfahrzeugkabine nach einem der Ansprüche 1 bis 11,
wobei die Verschlussklappe (18) um eine feste Schwenkachse herum verschwenkbar gelagert ist, welche sich an der Verbindungsstelle von verschwenkbarer Verschlussklappe und Decke (6) befindet.

13. Luftfahrzeug,
**dadurch gekennzeichnet, dass** es zumindest eine Luftfahrzeugkabine (2) nach einem der Ansprüche 1 bis 12 aufweist.
